# EUROPEAN PATENT APPLICATION

(11) **EP 4 801 089 A1**
(43) Date of publication of application: **02.09.2026**
(21) Application number: 26160345.0
(22) Date of filing: 24.02.2026
(51) Int. Cl.: H04W 12/12, H04W 24/00, H04B 7/06

(54) **WIRELESS SECURITY DEVICE AND METHOD, AND BATTERY PACK**

(30) Priority: 27.02.2025 KR 20250026153
(71) Applicant: SAMSUNG SDI CO., LTD., Yongin-si, Gyeonggi-do 17084 (KR)
(72) Inventor: KIM, Minsu, 17084 Yongin-si, Gyeonggi-do (KR)
(74) Representative: Gulde & Partner

(57) **Abstract**

A wireless security device and method and a battery pack may be provided. The wireless security device comprises: a plurality of antennas associated with a battery management system, BMS; an angle-of-arrival estimator configured to estimate an angle of arrival from a signal received through at least one antenna among the plurality of antennas and calculate a reliability index for the angle of arrival; a beam forming controller configured to calculate a beam forming weight and control a phase and an amplitude of the signal based on the beam forming weight; a channel estimator configured to estimate a channel state of the signal and calculate a channel change rate based on the channel state; and an anomaly detector configured to perform anomaly detection for the signal based on the channel state, the channel change rate, the angle of arrival, and the beam forming weight.

## Description

### BACKGROUND

### 1. Field

Aspects of some embodiments of the present disclosure relate to a wireless security device and method and a battery pack.

### 2. Description of the Related Art

A battery pack may include various battery cells and a battery management system (BMS). The BMS may include one or more slave BMSs that monitor the various battery cells and a master BMS that manages the battery pack by communicating with the one or more slave BMSs.

If the one or more slave BMSs and the master BMS are connected by wires, wiring may be added and connections may become complex as the number of battery modules including battery cells in the battery pack increase. To address this issue, a wireless BMS may be used for communication within the battery pack and with controllers within a vehicle.

Using a wireless BMS in a battery pack may reduce the complex wiring inside the battery pack, improve maintainability, and allow more battery cells to be added to the available space within the battery pack, all of which may help provide a longer driving range. However, a wireless BMS may be vulnerable to intentional external wireless attacks. The above information disclosed in this Background section is only for enhancement of understanding of the background and therefore the information discussed in this Background section does not necessarily constitute prior art.

### SUMMARY

One or more embodiments of the present disclosure are directed to a wireless security device and method, and a battery pack that can enhance security against external intentional wireless attacks.

According to some embodiments of the present disclosure, a wireless security device may be provided. The wireless security device includes: a plurality of antennas associated with a battery management system (BMS); an angle-of-arrival estimator configured to estimate an angle of arrival from a signal received through at least one antenna among the plurality of antennas and calculate a reliability index for the angle of arrival; a beam forming controller configured to calculate a beam forming weight and control a phase and an amplitude of the signal based on the beam forming weight; a channel estimator configured to estimate a channel state of the signal and calculate a channel change rate based on the channel state; and an anomaly detector configured to perform anomaly detection for the signal based on the channel state, the channel change rate, the angle of arrival, and the beam forming weight.

The wireless security device may further include a security policy manager configured to determine a security policy based on abnormality detection results of the anomaly detector.

The anomaly detector may be configured to calculate a threat level based on the signal being determined to satisfy an abnormality criterion based on the abnormality detection results, and the security policy manager may be configured to determine a security policy based on the threat level.

The anomaly detector may be configured to calculate a signal continuity index based on times during which signals are detected at the angle of arrival and calculate the threat level based on the reliability index, the signal continuity index, and a signal strength index, and the signal strength index may be calculated from a power of the signal.

The beam forming controller may be configured to set constraints for maximizing a gain in a direction of a target signal and minimizing a gain in a direction of an interference signal based on the angle of arrival, the reliability index, and a previously estimated channel state information, and the beam forming weight satisfies the constraints.

The security policy manager may be configured to activate the plurality of antennas based on the threat level.

The angle-of-arrival estimator may be configured to estimate the angle of arrival using a multiple signal classification (MUSIC) algorithm, and the security policy manager may be configured to adjust a angle unit set in the MUSIC algorithm according to the threat level.

The security policy manager may be configured to determine a formation of a null pattern in a direction of the angle of arrival according to the threat level.

The channel estimator may be configured to estimate the channel state for the signal at a current time point using a recursive least square (RLS) method using a forgetting factor, and adjust the forgetting factor based on a signal-to-noise ratio of the signal, an estimated error between the signal at a previous time point and a signal predicted by the channel state, and a channel change rate at the previous time point.

The channel estimator may be configured to calculate a channel quality index for the channel state, and the anomaly detector may be configured to perform anomaly detection on the signal based on the channel quality index.

The angle-of-arrival estimator may be configured to calculate a spatial reliability by comparing an angle of arrival angle estimated at a current time point with a set trust region, calculate a temporal reliability by analyzing time series data including an estimated angle of arrival information of the current time point and an estimated angle of arrival information of a previous time point, calculate a statistical reliability based on a signal-to-noise ratio of the signal and data used for estimating the angle of arrival, and to calculate the reliability index based on the spatial reliability, the temporal reliability, and the statistical reliability.

The angle-of-arrival estimator may be configured to dynamically adjust the trust region according to driving information of a vehicle.

According to some embodiments of the present disclosure, a battery pack may be provided. The battery pack includes a battery module; a first battery management system (BMS) comprising a first antenna, and configured to monitor the battery module; a second BMS comprising a second antenna, and configured to communicate wirelessly with the first BMS; and a wireless security device configured to configure the first antenna and the second antenna as a phased array antenna, determine whether a signal received through the phased array antenna satisfies an abnormality criterion, calculate a threat level for the signal based on the signal satisfying the abnormality criterion, and determine a security policy according to the threat level.

The wireless security device may include an angle-of-arrival estimator configured to estimate an angle of arrival from the signal and calculate a reliability index for the angle of arrival; a beam forming controller configured to set constraints for maximizing a gain in a target signal direction and minimizing a gain in an interference signal direction based on the angle of arrival, the reliability index, and a previously estimated channel state information, calculate a beam forming weight satisfying the constraints, and control a phase and an amplitude of the signal based on the beam forming weight; a channel estimator configured to estimate a channel state of the signal and calculate a channel change rate based on the channel state; an anomaly detector configured to determine whether the signal satisfies an abnormality criterion based on the channel state, the channel change rate, the angle of arrival, and the beam forming weight, and calculate the threat level; and a security policy manager configured to determine the security policy based on the threat level.

The angle-of-arrival estimator may be configured to estimate the angle of arrival using a multiple signal classification (MUSIC) algorithm, and the security policy manager may be configured to adjust an angle unit set in the MUSIC algorithm according to the threat level.

The wireless security device may further include a signal processor configured to process the signal and calculate a signal-to-noise ratio, wherein the channel estimator may be configured to estimate the channel state for the signal at a current time point using a recursive least square (RLS) method using a forgetting factor, and adjust the forgetting factor based on the signal-to-noise ratio of the signal, an estimated error between the signal at a previous time point and a signal predicted by the channel state, and a channel change rate at the previous time point.

The security policy manager may be configured to control the beam forming controller so that a gain becomes 0 in a direction of the angle of arrival according to the threat level.

According to some embodiments of the present disclosure, a wireless security method of a wireless security device located in a battery pack may be provided. The wireless security method includes estimating an angle of arrival from a signal received through a phased array antenna including a first antenna of a first battery management system (BMS) that monitors a battery module and a second antenna of a second BMS that communicates with the first BMS; calculating a beam forming weight that satisfies constraints of maximizing gain in a direction of a target signal and minimizing gain in a direction of an interference signal based on the angle of arrival and a previously estimated channel state information; estimating a channel state of the signal; calculating a channel change rate based on the channel state; and determining whether the signal satisfies an abnormality criterion based on the channel state, the channel change rate, the angle of arrival, and the beam forming weight.

The wireless security method may further include calculating a threat level for the signal based on the signal being determined to satisfy the abnormality criterion; and determining a security policy based on the threat level.

The estimating the angle of arrival may include estimating the angle of arrival using a multiple signal classification (MUSIC) algorithm, and the determining the security policy may include adjusting an angle unit set in the MUSIC algorithm according to the threat level.

The estimating the channel state may include estimating the channel state for the signal using a recursive least square (RLS) method using a forgetting factor; and determining the forgetting factor based on a signal-to-noise ratio of the signal, an estimated error between the signal at a previous time point and a signal predicted by the channel state, and a channel change rate at the previous time point.

The wireless security method may further include calculating channel quality indicator for the channel state, wherein the determining may include determining whether the signal satisfies an abnormality criterion based on the channel quality indicator.

The wireless security method may further include controlling a phase and an amplitude of the signal based on the beam forming weight.

### BRIEF DESCRIPTION OF THE DRAWINGS

FIG. 1 depicts a block diagram of an electric vehicle including a battery pack according to some embodiments.
FIG. 2 depicts a block diagram of a wireless security device including a phased array antenna system according to some embodiments.
FIG. 3 depicts a block diagram of the phased array antenna system of FIG. 2 according to some embodiments.
FIG. 4 depicts a message flow of a wireless security method of a wireless security device according to some embodiments.
FIG. 5 depicts a flow diagram of a null formation method according to a security policy of a security policy manager according to some embodiments.
FIG. 6 depicts a block diagram of a wireless security device according to some embodiments.

### DETAILED DESCRIPTION

Aspects of some embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will more fully convey aspects of some embodiments to those skilled in the art. The drawings and description are to be regarded as illustrative in nature and not restrictive. Like reference numerals designate like elements throughout the specification.

In the flowchart described with reference to the drawings in this specification, the order of operations may be changed, several operations may be merged, some operations may be divided, and specific operations may not be performed.

Throughout the specification and claims, if a part is referred to "include" a certain element, it may mean that it may further include other elements rather than exclude other elements, unless specifically indicated otherwise.

In addition, expressions described in the singular may be interpreted in the singular or plural unless explicit expressions such as "one" or "single" are used.

In addition, terms including an ordinal number, such as first, second, etc., may be used to describe various elements, but the elements are not limited by the terms. The above terms are used only for the purpose of distinguishing one element from another element. For example, without departing from the scope of the present disclosure, a first element may be referred to as a second element, and similarly, a second element may be referred to as a first element.

Furthermore, if a component is referred to be "connected" with another component, it includes not only the case where two components are "directly connected" but also the case where two components are "indirectly or non-contactedly connected" with another component interposed therebetween, or the case where two components are "electrically connected." On the other hand, if an element is referred to as "directly connected" to another element, it should be understood that no other element exists in the middle.

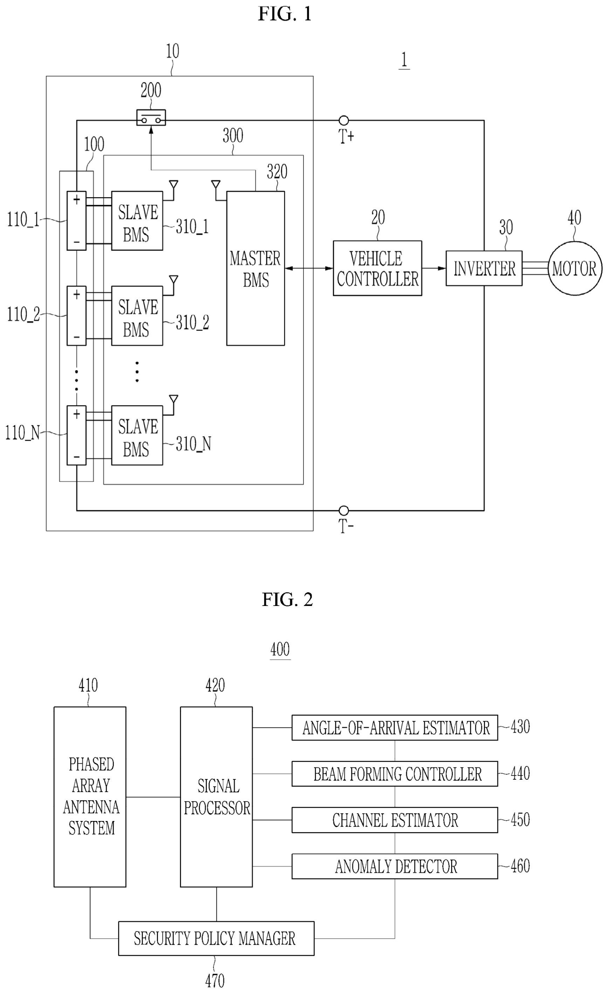

FIG. 1 depicts a block diagram of an electric vehicle including a battery pack according to some embodiments.

Referring to FIG. 1, an electric vehicle 1 may include a battery pack 10, a vehicle controller 20, an inverter 30, and an electric motor 40.

The battery pack 10 may store electric energy to supply the electric power for the electric vehicle 1.

The battery pack 10 may be connected to an external charging device or load through terminals T+ and T-, and the battery pack 10 may be charged by the external charging device and discharged by the load.

The vehicle controller 20 may transmit a control command to the battery pack 10 through communication with the battery pack 10 and receive a response to the control command or information about the status of the battery pack 10 from the battery pack 10. Although one vehicle controller 20 is illustrated in FIG. 1, a plurality of vehicle controllers may be provided within the electric vehicle 1, and one or more (e.g., each) of the plurality of vehicle controllers may be designed to control a corresponding function.

The inverter 30 may be connected between the terminal T+ and the terminal T- of the battery pack 10, and may convert direct current (DC) power from the battery 100 included in the battery pack 10 into alternating current (AC) power and supply the converted power to the electric motor 40.

The electric motor 40 may provide power to the electric vehicle 1 by driving according to AC power supplied from the inverter 30. For example, a three-phase AC motor may be used as the electric motor 40. Components within the electric vehicle that receive discharge power from the battery 100, including the inverter 30 and the electric motor 40, may be collectively referred to as an electric load.

If the relay 200 is turned on during operation of the electric loads 30 and 40 and/or the charging device (not shown), the battery 100 may be charged or discharged.

The battery pack 10 may include a battery 100, a relay 200, and a wireless battery management system (WBMS) 300.

The battery 100 may include a plurality of battery modules 110_1 to 110_N that are electrically connected to each other.

The battery modules 110_1 to 110_N may include a plurality of battery cells. The plurality of battery cells may be connected in series. One or more (e.g., each) of the plurality of battery cells may be, for example, a lithium-ion cell.

The relay 200 may control a current path during charging or discharging of the battery 100. The relay 200 may be connected between the battery 100 and the terminal T+. In some embodiments, the relay 200 may be connected between the battery 100 and the terminal T-.

The relay 200 may be turned on or off in response to a switching signal from the WBMS 300. The relay 200 may be a mechanical contactor that is configured to be turned on or off by the magnetic force of a coil, or a semiconductor switch such as a metal oxide semiconductor field effect transistor (MOSFET).

The WBMS 300 may include one or more slave or first BMSs 310_1 to 310_N and a master or second BMS 320.

The one or more slave BMSs 310_1 to 310_N may correspond one-to-one to the one or more battery modules 110_1 to 110_N included in the battery pack 10.
Each of the one or more slave BMSs 310_1 to 310_N may be electrically connected to a corresponding battery module 110_1 to 110_N. For example, the slave BMS 310_1 may be electrically connected to the battery module 110_1, and the slave BMS 310_2 may be electrically connected to the battery module 110_2. The slave BMS 310_N may be electrically connected to the battery module 110_N. In some embodiments, each of the one or more slave BMSs 310_1 to 310_N may correspond to two or more battery modules 110_1 to 110_N.

Each of the one or more slave BMSs 310_1 to 310_N may detect the overall status (e.g., voltage, current, temperature) of the battery modules 110_1 to 110_N electrically connected to itself, and perform various control functions (e.g., charging, discharging, balancing) to adjust the status of the battery modules 110_1 to 110_N. In some embodiments, one or more (e.g., each) control function may be performed by one or more (e.g., each) slave BMS 310_1 to 310_N based on the status of the battery module 110_1 to 110_N or may be performed according to a command from the master BMS 320.

The master BMS 320 may be wirelessly connected to the one or more slave BMSs 310_1 to 310_N and may communicate with the one or more slave BMSs 310_1 to 310_N through wireless connection. The master BMS 320 may receive status information of the battery modules 110_1 to 110_N from the one or more slave BMSs 310_1 to 310_N and perform control functions such as state of charge (SOC), power control, cell balancing control, fault diagnosis control, cooling control, and/or thermal runaway detection control. In some embodiments, the master BMS 320 may supply or cut off power of the battery modules 110_1 to 110_N to the load by controlling the relay 200 based on the status information of the battery modules 110_1 to 110_N.

The master BMS 320 and the one or more slave BMSs 310_1 to 310_N may each include at least one antenna.

According to some embodiments, at least one antenna of each of the one or more slave BMSs 310_1 to 310_N may be placed on top of a corresponding battery module 110_1 to 110_N. For example, each of the one or more slave BMSs 310_1 to 310_N may include two antennas, and the two antennas may be placed on top part of the battery modules 110_1 to 110_N at a set distance from each other.

The wireless connection between the master BMS 320 and the one or more slave BMSs 310_1 to 310_N may be capable of relatively reducing the complexity of communication wirings, relatively reducing the volume of the battery pack 10, adding relatively more battery cells to the available space within the battery pack 10, and providing a relatively longer driving distance.

According to some embodiments, the antennas of the WBMS 300, i.e., the antennas of the one or more slave BMSs 310_1 to 310_N and the master BMS 320, may be antennas capable of controlling the magnitude and phase of a signal. A phased array antenna system may be constructed with antennas of the one or more slave BMSs 310_1 to 310_N and master BMS 320.

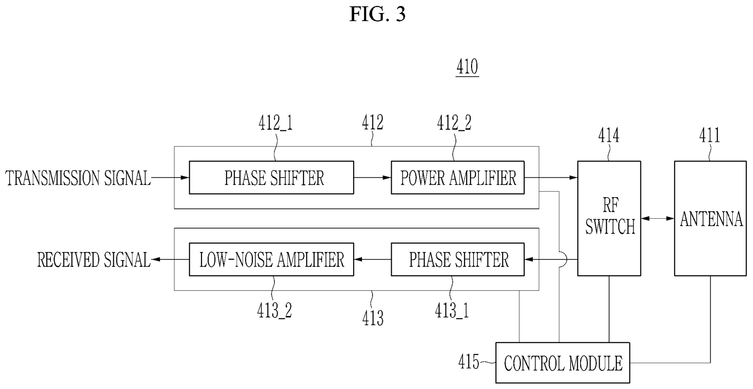

FIG. 2 depicts a block diagram of a wireless security device including a phased array antenna system according to some embodiments. FIG. 3 depicts a block diagram of the phased array antenna system of FIG. 2 according to some embodiments.

Referring to FIG. 2, a wireless security device 400 may be located within a battery pack 10 and may perform wireless security operations using antennas of one or more slave BMSs 310_1 to 310_N and a master BMS 320.

The wireless security device 400 may include a phased array antenna system 410, a signal processor 420, an angle-of-arrival estimator 430, a beam forming controller 440, a channel estimator 450, an anomaly detector 460, and a security policy manager 470.

Referring to FIG. 3, the phased array antenna system 410 may include an antenna 411, a transmitting module 412, a reception module 413, an RF switch 414, and a control module 415. The transmission module 412, the reception module 413, the RF switch 414, and the control module 415 may correspond to one antenna 411, and the number of transmission modules 412, reception modules 413, RF switches 414, and control modules 415 may be determined according to the number of antennas 411. For convenience, one antenna 411 is illustrated in FIG. 3.

The antenna 411 may transmit RF signals in a transmission mode and receive RF signals in a reception mode. The antenna 411 may be a patch antenna and may have linear vertical polarization.

The transmission module 412 may be connected to the antenna 411. The transmission module 412 may change the phase and amplitude of the transmission signal. The transmission module 412 may adjust the phase and amplitude of the transmission signal according to a control command of the control module 415. The transmission module 412 may include a phase shifter 412_1 and a power amplifier 412_2. The phase shifter 412_1 may change the phase of a transmission signal according to a phase control command of the control module 415. The power amplifier 412_2 may amplify the power of the transmission signal and transmit it to the antenna 411 according to an amplitude control command of the control module 415.

The reception module 413 may be connected to the antenna 411. The reception module 413 may change the phase and amplitude of the reception signal. The reception module 413 may adjust the phase and amplitude of the received signal according to a control command of the control module 415. The reception module 413 may include a phase shifter 413_1 and a low-noise amplifier 413_2. The phase shifter 413_1 may change the phase of the received signal according to a phase control command of the control module 415. The low-noise amplifier 413_2 may amplify the received signal with low noise and output it according to an amplitude control command from the control module 415. The received signal amplified with low noise by the low-noise amplifier 413_2 may be transmitted to the signal processor 420.

The RF switch 414 may connect the transmission module 412 and the antenna 411 or the reception module 413 and the antenna 411 under the control of the control module 415. In some embodiments, the RF switch 414 may connect the transmission module 412 and the antenna 411 in transmission mode under the control of the control module 415. The RF switch 414 may connect the reception module 413 and the antenna 411 in the reception mode under the control of the control module 415.

The control module 415 may control the antenna 411, the transmission module 412, the reception module 413, and the RF switch 414 according to the control command of the security policy manager 470.

The control module 415 may control the transmission module 412 and the reception module 413 according to the phase and amplitude control commands of the beam forming controller 440.

The control module 415 may measure a phase offset and an amplitude offset from the transmission signal transmitted through the antenna 411 if the initial power is applied, and may generate an internal correction value including a phase offset and an amplitude offset. The control module 415 receives a phase value and an amplitude value in the transmission mode through phase and amplitude control commands of the beam forming controller 440, and may correct the phase value and amplitude value by reflecting the phase offset and amplitude offset corresponding to internal correction values, to the received phase values and amplitude values, respectively. The control module 415 may transmit a phase control signal including a corrected phase value and an amplitude control signal including a corrected amplitude value to the phase shifter 412_1 and the power amplifier 412_2, respectively.

The control module 415 may measure a phase offset and an amplitude offset from a reception signal received through the antenna 411 if the initial power is applied, and may generate an internal correction value including a phase offset and an amplitude offset. The control module 415 receives a phase value and an amplitude value in the reception mode through phase and amplitude control commands of the beam forming controller 440, and may correct the phase value and amplitude value by reflecting the phase offset and amplitude offset corresponding to internal correction values, to the received phase value and amplitude value, respectively. The control module 415 may transmit a phase control signal including a corrected phase value and an amplitude control signal including a corrected amplitude value to the phase shifter 413_1 and the low-noise amplifier 413_2, respectively.

Again, referring to FIG. 2, the signal processor 420 may convert the received signal into a digital signal through an analog to digital converter (ADC). The digitized signal may be transmitted as a received signal to the angle-of-arrival estimator 430, the beam forming controller 440, and the channel estimator 450.

The signal processor 420 may calculate the signal-to-noise ratio (SNR) of the received signal based on the ratio of the power of the digitized signal to the noise power. The received signal may be received via at least one antenna of the phased array antenna system 410.

The signal processor 420 can calculate a signal strength index from the power of the received signal. The signal strength index may have values between 0 and 1. For example, the signal strength index may be calculated as in Equation 1. $I = \left({P}_{received}-{P}_{\left.min\right)}\right. / \left({P}_{max}-{P}_{min}\right)$

In Equation 1, P_{received} represents the power of the currently received signal. Pₘᵢₙ may represent a minimum signal power that the system may detect, and Pₘₐₓ may represent a maximum signal power that the system allows. The angle-of-arrival estimator 430 may estimate the angle of arrival of the received signal. The angle-of-arrival estimator 430 may concurrently estimate the angle of arrival for one or more (e.g., each) of received signals from a one or more signal sources (e.g., through parallel processing).

According to some embodiments, the angle-of-arrival estimator 430 may use a multiple signal classification (MUSIC) algorithm to estimate the angle of arrival of the received signal. The angle-of-arrival estimator 430 may convert the received signal into a frequency domain signal through a fast Fourier transform (FFT) to estimate the angle of arrival using the MUSIC algorithm. As understood by those of skill in the art, the MUSIC algorithm uses the fact that the direction vector, which contains information about the angle of incidence of the signal, is orthogonal to the noise subspace. The angle-of-arrival estimator 430 calculates a spatial spectrum as in Equation 2 while changing the angle θᵢ by a set angle unit according to the MUSIC algorithm, and may estimate an angle set in the area where the peak value occurs in the spatial spectrum for each calculated angle θᵢ as the angle of arrival of the received signal. $P \left({θ}_{i}\right) = \frac{{a}^{H} \left({θ}_{i}\right) a \left({θ}_{i}\right)}{{a}^{H} \left({θ}_{i}\right) {E}_{N} {E}_{N}^{H} a \left({θ}_{i}\right)}$

In Equation 2, P(θᵢ) represents the spatial spectrum for the elevation angle θᵢ of the MUSIC algorithm. In some embodiments, a(θᵢ) represents a direction vector determined by the elevation angle θᵢ. In some embodiments, the direction vector a(θᵢ) may be expressed as in Equation 3. E_{N} is a noise subspace matrix generated by using eigenvalue decomposition (EVD) of the covariance of the received signal. a^{H}(θᵢ) represents a hermitian transpose of a(θᵢ). $a \left({θ}_{i}\right) = \left[exp\left(-j2{πd}_{1}sin\left({θ}_{i}\right)/λ\right),…,exp\left(-j2{πd}_{n}sin\left({θ}_{i}\right)/λ\right)\right]$

In Equation 3, dᵢ represents the position of the i-th antenna, and λ represents the wavelength.

The angle-of-arrival estimator 430 may calculate a reliability index of the estimated angle of arrival. The angle-of-arrival estimator 430 may calculate spatial reliability, temporal reliability, and statistical reliability for the estimated angle of arrival, and may calculate the reliability index of the estimated angle of arrival based on the spatial reliability, temporal reliability, and statistical reliability. The angle-of-arrival estimator 430 may express spatial reliability, temporal reliability, and statistical reliability as normalized values between 0 and 1.

The angle-of-arrival estimator 430 may calculate spatial reliability by comparing the angle of arrival estimated by the angle-of-arrival estimator 430 with a set trust region.

The trust region θ_{trusted} may be set to satisfy spatial constraints, such as, for example, using Equation 4. ${θ}_{trusted} ∈ \left\{θ\left‖{θ}_{min}\leq θ\leq {θ}_{max},{ϕ}_{min}\right.\leq ϕ\leq {ϕ}_{max}\right\}$

Here, θ is an elevation angle, φ is an azimuth angle, θₘᵢₙ and θₘₐₓ may represent an allowable elevation angle range, and φₘᵢₙ and φₘₐₓ may represent an allowable azimuth angle range.

The allowable elevation angle range and allowable azimuth angle range may be set by considering the physical structure of the vehicle and the installation location of the battery pack. For example, the trust region may be set to an elevation angle within ±30 degrees from the horizontal plane and an azimuth angle within ±45 degrees from the front of the vehicle, by considering the physical structure of the vehicle and the installation location of the battery pack.

The spatial reliability Rs may be calculated as shown in Equation 5. ${R}_{s} = exp \left(-\left(\frac{{\left(θ-{θ}_{center}\right)}^{2}}{2 {σ}_{θ}^{2}}+\frac{{\left(ϕ-{ϕ}_{center}\right)}^{2}}{2 {σ}_{ϕ}^{2}}\right)\right)$

In Equation 5, θ represents the measured angle of arrival (elevation angle), and φ represents the measured azimuth angle. Θ_{center} represents a central elevation of the trust region, and φ_{center} represents a central azimuth of the trust region. In some embodiments, σ _{Θ} and σ_{φ} represent the allowable standard deviations of the elevation and azimuth angles, respectively.

Through Equation 5, spatial reliability may be output with a value closer to 1 as the measured elevation and azimuth angles are closer to the center of the trust region, and a value closer to 0 as they are farther from the center of the trust region.

The angle-of-arrival estimator 430 may dynamically adjust the trust region according to the driving information of the vehicle 1. For example, the trust region may be adjusted as in Equation 6. ${θ}_{trusted} \left(t+1\right) = {θ}_{trusted} \left(t\right) + Δθ \left(environment\right)$

In Equation 6, Δθ(environment) represents driving information of the vehicle, and may include, for example, at least one of vehicle speed, driving mode information indicating whether it is city driving or highway driving, and communication quality statistical information.

The angle-of-arrival estimator 430 may analyze time series data including the estimated angle of arrival information of the current time point and the estimated angle of arrival information of the previous time point, calculate a temporal consistency index, and calculate temporal reliability based on the temporal consistency index. The temporal consistency index for the direction of arrival of a signal may be calculated as shown in Equation 7. ${R}_{t} = exp \left(\frac{- {\left|θ\left(t\right)-θ\left(t-Δt\right)\right|}^{2}}{2 {σ}_{t}^{2}}\right)$

In Equation 7, Rₜ represents the temporal consistency index and may have a value between 0 and 1. Θ(t) may represent the angle of arrival at the current time point t, and θ(t-Δt) may represent the angle of arrival at the previous time point t-Δt. σₜ may represent the standard deviation of the allowable angular variation. In some embodiments, the temporal consistency index calculated according to Equation 7 may be used as temporal reliability.

The angle-of-arrival estimator 430 may calculate a statistical reliability based on the SNR of the received signal and the spectrum data used for the angle of arrival estimation.

The angle-of-arrival estimator 430 may express spatial reliability, temporal reliability, and statistical reliability as normalized values between 0 and 1.

The angle-of-arrival estimator 430 may calculate the reliability index of the angle of arrival by applying weights to one or more (e.g., each) of spatial reliability, temporal reliability, and statistical reliability. The reliability index of the angle of arrival may be calculated as in Equation 8. $CI = {w}_{s} \times {R}_{s} + {w}_{t} \times {R}_{t} + {w}_{st} \times {R}_{st}$

In Equation 8, CI represents the reliability index, and Rₛ, Rₜ, and Rₛₜ represent spatial reliability, temporal reliability, and statistical reliability, respectively. In some embodiments, wₛ, wₜ, and wₛₜ represent weights applied to spatial reliability, temporal reliability, and statistical reliability, respectively.

The angle-of-arrival estimator 430 may dynamically adjust the weights (i.e., wₛ, wₜ, and wₛₜ in Equation 8) applied to each of spatial reliability, temporal reliability, and statistical reliability according to the operating environment and operating status.

In some embodiments, the angle-of-arrival estimator 430 may use an estimation of signal parameter via rotational invariance techniques (ESPRIT) method to estimate the angle of arrival. The angle-of-arrival estimator 430 may transmit the estimated angle of arrival and reliability index to the beam forming controller 440.

The beam forming controller 440 may calculate one or more beam forming weights based on the angle of arrival information and reliability index estimated by the angle-of-arrival estimator 430 and the channel state information estimated by the channel estimator 450. The beam forming controller 440 may apply the one or more beam forming weights to corresponding antennas of the phased array antenna system 410. The beam forming controller 440 may strengthen signals in a first or desired direction and suppress signals in a second or suspicious direction by applying the one or more beam forming weights to corresponding antennas of the phased array antenna system 410 in the reception mode. In some embodiments, the beam forming controller 440 may provide beams in a reliable direction by applying the one or more beam forming weights to the corresponding antennas of the phased array antenna system 410 in the transmission mode.

The beam forming controller 440 may use a linear constraint minimum variance (LCMV) technique to calculate the one or more beam forming weights. LCMV is a method that reduces or minimizes the power of signals other than signals that meet the linear constraints, and the beam forming weights corresponding to the solution of the LCMV technique may be calculated as shown in Equation 9. $\begin{matrix}{min}_{w} \left\{{w}^{H}Rw\right\} s . t {C}^{H} w = f \\ w = {R}^{- 1} C {\left[{C}^{H}{R}^{- 1}C\right]}^{- 1} f\end{matrix}$

In Equation 9, w represents a beam forming weight vector, and R represents the covariance matrix of the received signal. In some embodiments, C represents a linear constraint matrix, which may be configured in the form of Equation 10. f may represent the response vector of linear constraints. w^{H} represents the conjugate transpose of the beam forming weight vector, and C^{H} represents the conjugate transpose of the linear constraint matrix. $C = \left[{H_desired}_{¯}\left|{H_interference}_{¯}\right.\right]$

In Equation 10, H_desired represents the channel response in the first or desired signal direction, and H_interference represents the channel response in the second or interference signal direction.

The beam forming controller 440 may adjust the linear constraint matrix of the LCMV technique according to the previous channel state information estimated by the channel estimator 450, the angle of arrival estimated by the angle-of-arrival estimator 430, and the reliability index calculated by the angle-of-arrival estimator 430.

The beam forming controller 440 may generate a linear constraint matrix based on the steering vector and channel state information according to the angle of arrival θ in the LCMV technique. The beam forming controller 440 may calculate a channel response in the direction of a first or desired signal using a steering vector of a first or reliable angle of arrival θ and channel state information estimated by the channel estimator 450, and may calculate a channel response in the direction of a second or an interference signal using a steering vector of a second or suspicious angle of arrival θ and channel state information estimated by the channel estimator 450.

In some embodiments, the beam forming controller 440 may set a gain for one or more (e.g., each) direction through the response vector of the linear constraint of Equation 9. The first or reliable direction may be set to have unity gain, for example, 1, and the second or interference direction may be set to have zero gain, for example, 0. In some embodiments, the beam forming controller 440 may set the response vector of the linear constraint to 1 for a first or reliable angle of arrival θ and set the response vector of the linear constraint to 0 for a second or suspicious angle of arrival θ. These settings allow for the calculation of beam forming weights that may suppress interference signals while preserving the signal in the desired direction.

In some embodiments, the beam forming controller 440 may adjust the strength of the linear constraints by weighting the channel response in the first or desired signal direction and the channel response in the second or interference signal direction according to the reliability index. For example, a higher confidence index may be adjusted to apply a larger weight, thus making the linear constraints more stringent. The beam forming controller 440 sets the strength of the linear constraints to be high through a large weight if the reliability index is high, so that the linear constraints in the corresponding direction may be strictly maintained, and sets the strength of the linear constraints to be low through a low weight if the reliability index is low, so that more flexible beam pattern formation may be allowed.

The beam forming controller 440 may generate beam formed signals as in Equation 11 by applying beam forming weights. $y \left(t\right) = {w}^{H} x \left(t\right)$

In Equation 11, x(t) represents the input signal vector, and y(t) represents the beam formed signals.

The beam forming controller 440 may determine the phase and amplitude of a signal corresponding to one or more (e.g., each) antenna from the beam forming weights. The amplitude of the signal corresponding to the antenna may be determined from the magnitude of the beam forming weights calculated through the LCMV technique, and the phase of the signal corresponding to the antenna may be determined from the angle of arrival.

The beam forming controller 440 may transmit beam forming weights, beam pattern information, and nulling direction information to the channel estimator 450. The beam pattern information refers to a spatial radiation pattern formed by beam forming weights, and may be expressed as in Equation 12. The nulling direction information may indicate a second or suspicious direction information. $B \left(θ, ϕ\right) = {w}^{H} \times a \left(θ, ϕ\right)$

The beam pattern information is a complex function representing the gain of the antenna array for each direction, and may represent spatial characteristics including gain and attenuation in a specific direction.

The channel estimator 450 may estimate the channel state using the received signal.

The channel estimator 450 may use the recursive least squares (RLS) method to estimate the channel state. According to the RLS method, an error between the received signal and a signal predicted by the current estimated channel state is estimated, estimated tap coefficients of the channel are updated according to the estimated error and the time-varying gain, and the channel state may be estimated using the estimated tap coefficients of the channel. This RLS method may be expressed as in Equations 13 to 17. $π \left(n\right) = P \left(n-1\right) u \left(n\right)$

In Equation 13, n represents the number of times the tap is updated and may mean a time point. P represents an inverse correlation matrix, and u is an input vector, which may represent a tap delay vector composed of received signal samples of the current time point and previous time points. $k \left(n\right) = \frac{λ {\left(n\right)}^{- 1} π \left(n\right)}{1 + λ {\left(n\right)}^{- 1} {u}^{H} π \left(n\right)}$

In Equation 14, k represents the gain vector. λ represents a forgetting factor and may have a value between 0 and 1. The initial value of the forgetting factor may be set arbitrarily, for example, it may be set to 0.998. $α \left(n\right) = d \left(n\right) - {\hat{h}}^{H} \left(n-1\right) u \left(n\right)$

In Equation 15, α may represent the estimated error between the received signal and the signal predicted by the estimated channel state. d(n) is a desired reference signal, which may represent the signal actually received at the current tap (n). In some embodiments, d(n) may be represented as a scalar value at a single time point, and u(n) may be a vector containing received signal samples of M consecutive taps (time points), such as [u(n), u(n-1), ..., u(n-M+1)]. *ĥ^{H}*(*n-*1)*u*(*n*) may represent a signal predicted by the channel state estimated in the previous tap (n-1). $\hat{h} \left(n\right) = \hat{h} \left(n-1\right) + k \left(n\right) α * \left(n\right)$

In Equation 16, *ĥ* is estimated tap coefficients of the channel, which may represent the estimated channel state. $P \left(n\right) = {λ}^{- 1} P \left(n-1\right) - {λ}^{- 1} k \left(n\right) {u}^{H} \left(n\right) P \left(n-1\right)$

In some embodiments, the estimated tap coefficients of the channel and the initial value of the inverse correlation matrix may be expressed as in Equation 18. $\hat{h} \left(0\right) = 0 . P \left(0\right) = {δ}^{- 1} I$

Here, *δ* is an arbitrary constant, and 0 and I represent the zero vector and the identity matrix, respectively.

The channel estimator 450 may use the nulling direction information received from the beam forming controller 440 in the channel estimation process of the RLS technique. In the RLS technique, nulling direction information may be reflected in the gain vector calculation process of Equation 14. In some embodiments, for signals in the direction to which nulling is applied, the influence of data in that direction on channel estimation may be reduced by multiplying the signal in the direction to which nulling is applied in the input vector u(n) by a weight corresponding to that direction. This weight may be set to a value close to 0 based on the nulling direction information. In some embodiments, the influence of the signal in the direction to which nulling is applied on the channel estimation may be minimized in the channel estimation tap coefficient update process of Equation 16.

As in Equation 16, the channel state for the received signal may be compensated by using the estimated tap coefficients whose final update has been completed in the current tap n.

The channel estimator 450 may calculate a channel change rate indicating a channel state change over time based on channel state information estimated in the current tap n.

According to some embodiments, the channel estimator 450 may adaptively adjust the forgetting factor of the RLS method based on the SNR of the received signal, the estimated error, and the channel change rate. The forgetting factor may be adjusted as in Equation 19. $λ \left(n\right) = {λ}_{b} + Δ λ \left(n-1\right)$

In Equation 19, λ_{b} is a basic forgetting factor, which may not be changed. Δ λ (n-1) represents the difference between a dynamic forgetting factor value that is dynamically adjusted and the basic forgetting factor, and may be defined as in Equation 20. $Δ λ \left(n-1\right) = {λ}_{final} - {λ}_{b}$

In Equation 20, λ_{final} is a dynamic forgetting factor, which may be calculated based on Equation 21. ${λ}_{final} = {w}_{1} \times {λ}_{SNR} + {w}_{2} \times {λ}_{err} + {w}_{3} \times {λ}_{var}$

In Equation 21, λ_{SNR} represents a dynamic forgetting factor based on the SNR of the received signal, λₑᵣᵣ represents a dynamic forgetting factor based on an error-based quality index, and λᵥₐᵣ represents a dynamic forgetting factor based on a channel change rate. Below, for convenience, the dynamic forgetting factor based on the SNR of the received signal is called a first dynamic forgetting factor, the dynamic forgetting factor based on the error-based quality index is called a second dynamic forgetting factor, and the dynamic forgetting factor based on the channel change rate is called a third dynamic forgetting factor. The first dynamic forgetting factor, the second dynamic forgetting factor, and the third dynamic forgetting factor may have values within a set range. For example, it may have values between 0.995 and 0.999.

The first dynamic forgetting factor is determined based on the SNR of the received signal, and may have a larger value as the SNR of the received signal increases. For example, if the SNR is greater than a first reference value (e.g., 20 dB), the first dynamic forgetting factor may be set to 0.999, if the SNR is greater than a second reference value (e.g., 10 dB) that is less than the first reference value (e.g., 20 dB), the first dynamic forgetting factor may be set to 0.997, and if the SNR is less than or equal to the second reference value (e.g., 10 dB), first dynamic forgetting factor may be set to 0.995.

The second dynamic forgetting factor may be determined based on an error-based quality index. The error-based quality index may be calculated as in Equation 22. ${α}_{norm} \left(n-1\right) = \frac{α \left(n-1\right)}{d \left(n-1\right)}$

In Equation 22, αₙₒᵣₘ represents an error-based quality index, α(n) represents the estimated error of the current tap n, and d(n) may represent the received signal of the current tap n.

The second dynamic forgetting factor may be determined by comparing an error-based quality index with a reference value, and the second dynamic forgetting factor when the error-based quality index is greater than the reference value may be set to be smaller than the second dynamic forgetting factor when the error-based quality index is less than the reference value. For example, if the error-based quality index is greater than a reference value (e.g., 0.1), the second dynamic forgetting factor may be set to 0.995, and if the error-based quality index is less than the reference value (e.g., 0.1), the second dynamic forgetting factor may be set to 0.999.

The third dynamic forgetting factor may be determined based on the channel change rate. The channel change rate may be calculated as in Equation 23. $v \left(n-1\right) = \frac{\left|h\left(n-1\right)-h\left(n-2\right)\right|}{h \left(n-2\right)}$

Here, v(n-1) represents the channel change rate at the previous tap (time point) (n-1).

The third dynamic forgetting factor may be determined by comparing the channel change rate with a reference value, and the third dynamic forgetting factor when the channel change rate is greater than the reference value may be set to be smaller than the third dynamic forgetting factor when the channel change rate is less than the reference value. For example, if the channel change rate is greater than the reference value, the third dynamic forgetting factor may be set to 0.995, and if the channel change rate is less than the reference value, the third dynamic forgetting factor may be set to 0.999.

The dynamic forgetting factor may be calculated from a weighted average value obtained by multiplying each of the first to third dynamic forgetting factors by a predetermined weight, as in Equation 21.

By organizing Equations 19 and 20, the forgetting factor in the current tap (n) may be determined by the dynamic forgetting factor as in Equation 24. $λ \left(n\right) = {λ}_{final}$

In some embodiments, the channel estimator 450 may calculate a channel quality index for the estimated channel state information. The channel estimator 450 may calculate an error-based quality index, a gain stability index, and an inverse correlation matrix stability index, and calculate the channel quality index by applying weights set to the error-based quality index, the gain stability index, and the inverse correlation matrix stability index, respectively.

The error-based quality index in the current tap (n) may be calculated based on Equation 25. ${α}_{norm} \left(n\right) = \frac{α \left(n\right)}{d \left(n\right)}$

In Equation 25, n represents the current tap.

The gain stability index may be calculated as the ratio of the gain vector at the current tap (n) to the gain vector at the previous tap (n-1), as in Equation 26. ${K}_{norm} = \frac{\left‖k\left(n\right)\right‖}{\left‖k\left(n-1\right)\right‖}$

Here, k(n) represents the gain vector of the current tap n, and k(n-1) represents the gain vector of the previous tap n-1.

The inverse correlation matrix stability index may be expressed as in Equation 27. ${P}_{cond} = \frac{σ max \left(P\left(n\right)\right)}{σ min \left(P\left(n\right)\right)}$

In Equation 27, σmax and σmin may represent the maximum and minimum singular values of the inverse correlation matrix P(n).

Next, the channel estimator 450 may calculate a channel quality index as in Equation 28. $CQI = \left(1-{E}_{norm}\right) \times {w}_{1} + \left(1-{K}_{norm}\right) \times {w}_{2} + \left(\frac{1}{{P}_{cond}}\right) \times {w}_{3}$

Here, CQI represents a channel quality index and may have a value between 0 and 1. w₁, w₂, and w₃ may represent weights applied to items related to the error-based quality index, gain stability index, and inverse correlation matrix stability index, respectively.

The channel estimator 450 may transmit estimated channel state information, channel change rate, and channel quality indicator to the anomaly detector 460. In some embodiments, the channel estimator 450 may transmit estimated channel state information to the beam forming controller 440.

The anomaly detector 460 may detect abnormal signals based on estimated channel state information, channel change rate, channel quality index, angle of arrival, and beam forming weight vector.

According to some embodiments, the anomaly detector 460 may utilize a one-class support vector machine (SVM). The one-class SVM may include a one-class function having channel state information, channel change rate, channel quality index, angle of arrival, and beam forming weight vector as parameters, as in Equation 29. The one-class SVM may learn normal communication patterns using one-class function. $F = \left[H,ΔH/Δt.CQI.θ.w\right]$

In Equation 29, H represents channel state information, ΔH/Δt represents a channel change rate, and CQI may represent a channel quality index. In some embodiments, θ represents the estimated angle of arrival, and w may represent the beam forming weight vector.

The one-class SVM inputs estimated channel information, channel change rate, channel quality information, angle of arrival, and beam forming weight vector into a one-class function, and calculates the value of the single-class function as in Equation 30. In some embodiments, the one-class SVM compares the value of the one-class function with a set threshold value to determine whether the signal satisfies an abnormality criterion, and outputs whether the signal is abnormal based on the abnormality criterion being satisfied. $Score = {SVM}_{score} \left(F\right)$

In Equation 30, Score may represent the value of a one-class function.

For example, a one-class SVM may output that the received signal is abnormal (e.g., the abnormality criterion has been satisfied) if the value of the one-class function is greater than the set threshold. In this regard, the abnormality criterion is the value of the one-class function.

In some embodiments, the anomaly detector 460 may calculate a threat level for an abnormal signal if an abnormal signal is detected. The threat level may be calculated based on Equation 31. $T = \left(1-CI\right) \times I \times S$

In Equation 31, T represents a threat level, and CI may represent a reliability index calculated by the angle-of-arrival estimator 430. I represents a signal strength index and may be calculated by the signal processor 420. S may represent a signal continuity index.

The anomaly detector 460 may calculate the signal continuity index by tracking the time during which a signal is continuously detected at the angle of arrival estimated by the angle-of-arrival estimator 430.

In some embodiments, the anomaly detector 460 may calculate a channel state anomaly index based on the channel state information estimated by the channel estimator 450. The channel state abnormality index may be calculated based on Equation 32. $CH = {w}_{1} \left(ΔH/Δt\right) + {w}_{2} \left(CQI\right) + {w}_{3} \left(ΔP/Δt\right)$

In Equation 32, CH represents a channel state-based anomaly index, and ΔP/Δt represents a reception power change rate. In some embodiments, w₁, w₂, and w₃ represent the weights applied to each element in Equation 32.

The anomaly detector 460 may calculate the threat level based on Equation 33. $T = \left(1-CI\right) \times I \times S \times CH$

The anomaly detector 460 may transmit the threat level for an abnormal signal to the security policy manager 470. In some embodiments, the security policy manager 470 determines a security policy based on the threat level of the abnormal signal detected by the anomaly detector 460, and may control the phased array antenna system 410, signal processor 420, angle-of-arrival estimator 430, beam forming controller 440, channel estimator 450, and anomaly detector 460 of the wireless security device 400 based on the determined security policy.

For example, the threat level may be classified into three levels. A security policy for level 1 may represent the lowest threat level and may be set to perform monitoring or continuous monitoring. A security policy for level 2 may be set to send a warning message and transmit null. A security policy for level 3 may represent the highest threat level and may be set to block communication, switch to emergency mode, and notify the BMS 320 and the vehicle controller 20.

The security policy manager 470 may determine the threat level as level 1 if the threat level is lower than the first reference value (e.g., T1), and may control the phased array antenna system 410, signal processor 420, angle-of-arrival estimator 430, beam forming controller 440, channel estimator 450, and anomaly detector 460 to perform monitoring (e.g., continuous monitoring) according to the security policy of level 1.

The security policy manager 470 may determine the threat level as level 2 if the threat level is higher than the first reference value (e.g., T1) and lower than the second reference value (e.g., T2), and may control the phased array antenna system 410, signal processor 420, angle-of-arrival estimator 430, beam forming controller 440, channel estimator 450, and anomaly detector 460 to form a null according to the security policy of level 2. To form a null under the control of the security policy manager 470, the angle-of-arrival estimator 430 may estimate (e.g., continuously estimate) the angle of arrival of a suspicious signal and update a reliability index, and the beam forming controller 440 may calculate one or more beam forming weights for forming a null using the LCMV technique. In some embodiments, the phased array antenna system 410 may implement a null pattern by adjusting the phase and amplitude of each antenna according to the calculated beam forming weights, and the channel estimator 450 can monitor the channel state after null formation to provide feedback for verifying the effectiveness of the null.

The security policy manager 470 may determine the threat level as level 3 if the threat level exceeds the second reference value (e.g., T2), and may control the phased array antenna system 410 according to the security policy of level 3 to block (e.g., completely block) communication.

In some embodiments, the security policy manager 470 may adjust an operating mode of the phased array antenna system 410 depending on the threat level. The operating mode may include an indication of whether the antennas are activated. The security policy manager 470 may activate a greater number of antennas as the threat level increases. For example, the security policy manager 470 may activate all antennas of the phased array antenna system 410 in the case of the highest threat level, and may activate only some of the antennas of the phased array antenna system 410 in the case of the lowest threat level.

The security policy manager 470 may adjust the operating mode of the phased array antenna system 410 according to the driving information of the electric vehicle 1 and threat level. For example, the security policy manager 470 may reduce power consumption by activating a first percent (e.g., 20%) of the antennas of the phased array antenna system 410 if the threat level is level 1 in highway driving mode. As another example, the security policy manager 470 may activate a second percent (e.g., 50%) of the antennas that is greater than the first percent in the case of a second level threat level in urban driving mode.

In some embodiments, the security policy manager 470 may control an operating speed of the phased array antenna system 410 and the signal processor 420 depending on the operating mode.

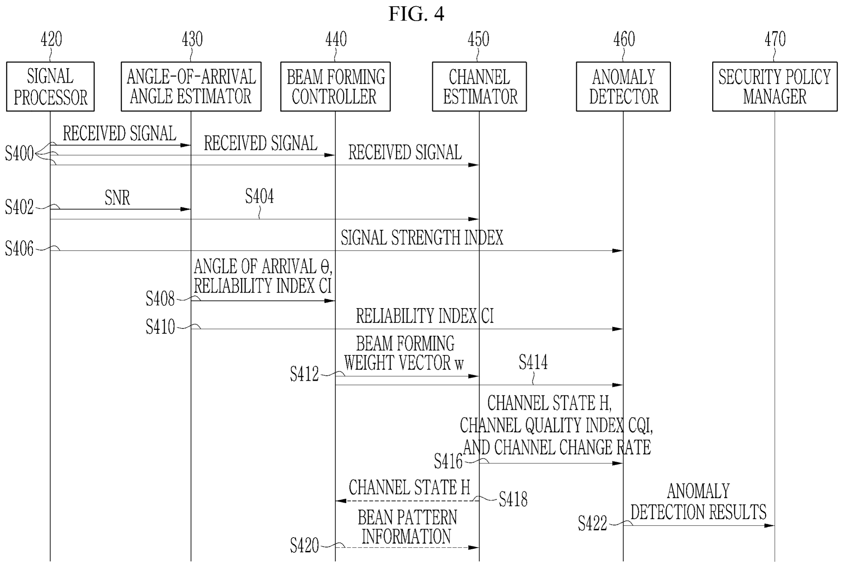

FIG. 4 depicts a message flow of a wireless security method of a wireless security device according to some embodiments.

Referring to FIG. 4, a signal processor 420 may process a signal received through at least one antenna of the phased array antenna system 410. The signal processor 420 may convert the received signal into a digitized signal, and the digitized signal may be transmitted as the received signal to the angle-of-arrival estimator 430, the beam forming controller 440, and the channel estimator 450 (S400).

In some embodiments, the signal processor 420 may calculate the SNR from the received signal and calculate a signal strength index based on the SNR of the received signal. The signal processor 420 may transmit the calculated SNR of the received signal to the angle-of-arrival estimator 430 and the channel estimator 450 (S402, and S404), and may transmit the signal strength index to the anomaly detector 460 (S406).

The angle-of-arrival estimator 430 may estimate the angle of arrival θ of the received signal using the MUSIC algorithm shown in Equation 2. The angle-of-arrival estimator 430 may convert the received signal into a frequency domain signal for angle of arrival estimation using the MUSIC algorithm.

The angle-of-arrival estimator 430 may calculate the spatial spectrum P(θᵢ) as in Equation 2 while changing the angle θᵢ by a set angle unit according to the MUSIC algorithm, and estimate an angle set in the area where the peak value occurs in the spatial spectrum P(θᵢ) for each calculated angle θᵢ as the angle of arrival θ of the received signal.

In some embodiments, the angle-of-arrival estimator 430 may calculate spatial reliability, temporal reliability, and statistical reliability for the estimated angle of arrival θ, and may calculate a reliability index CI of the estimated angle of arrival θ based on the spatial reliability, temporal reliability, and statistical reliability. In some embodiments, the SNR of the received signal may be used to calculate the statistical reliability as described above.

The angle-of-arrival estimator 430 may transmit the estimated angle of arrival θ and the calculated reliability index CI to the beam forming controller 440 (S408), and may transmit the calculated reliability index CI to the anomaly detector 460 (S410).

The beam forming controller 440 may calculate a beam forming weight vector w to be applied to the received signal using the LCMV technique. In some embodiments, the beam forming controller 440 may set linear constraints of the LCMV technique according to the angle of arrival and reliability index estimated by the angle-of-arrival estimator 430, and channel state information estimated from the immediately preceding received signal. The beam forming controller 440 may transmit the beam forming weight vector w to the channel estimator 450 and the anomaly detector 460 (S412, and S414).

The channel estimator 450 may estimate the channel state H of the received signal using the RLS method. In some embodiments, the channel estimator 450 may calculate a channel change rate indicating a change in channel state over time based on the channel state H estimated in the current tap. In some embodiments, the channel estimator 450 may adaptively adjust the forgetting factor of the RLS method based on the channel change rate, estimated error, and SNR of the received signal. In an embodiment, a larger value of the forgetting factor value may be set as the SNR is higher, the estimation error is smaller, and the channel change is more stable.

In some embodiments, the channel estimator 450 may calculate a channel quality index CQI for the estimated channel state information. The channel estimator 450 may transmit the channel state H, channel quality index CQI, and channel change rate to the anomaly detector 460 (S416). In some embodiments, the channel estimator 450 may transmit the channel state H to the beam forming controller 440 (S418).

The beam forming controller 440 may set linear constraints of the LCMV technique by utilizing the channel state H received from the channel estimator 450, and calculate the optimal beam forming weights through the LCMV technique. The beam forming controller 440 may generate beam pattern information by combining the calculated beam forming weight vector w with the array response vector for each direction. The generated beam pattern information may be transmitted to the channel estimator 450 (S420), and the channel estimator 450 may use the beam pattern information as input for more accurate channel state estimation.

The anomaly detector 460 may perform anomaly detection on the received signal based on an estimated channel state H, a channel change rate, a channel quality index CQI, an angle of arrival θ, and a beam forming weight vector w. The anomaly detector 460 may calculate the threat level if it determines that the received signal is an abnormal signal based on the anomaly detection results.

The anomaly detector 460 may transmit the anomaly detection results to the security policy manager 470 (S422). The anomaly detection results may include threat level information.

The security policy manager 470 may determine a security policy based on the anomaly detection results. For example, the security policy manager 470 may determine to monitor through an angle (e.g., a precise angle) of arrival estimation based on the anomaly detection results, and control the angle of arrival estimator 430 according to the security policy to enable an angle (e.g., a precise angle) of arrival estimation for the received signal.

In some embodiments, the angle of arrival estimator 430 estimates an angle (e.g., a precise angle) of arrival for the received signal by reducing the size of the angle unit set in the MUSIC algorithm according to the security policy of the security policy manager 470.

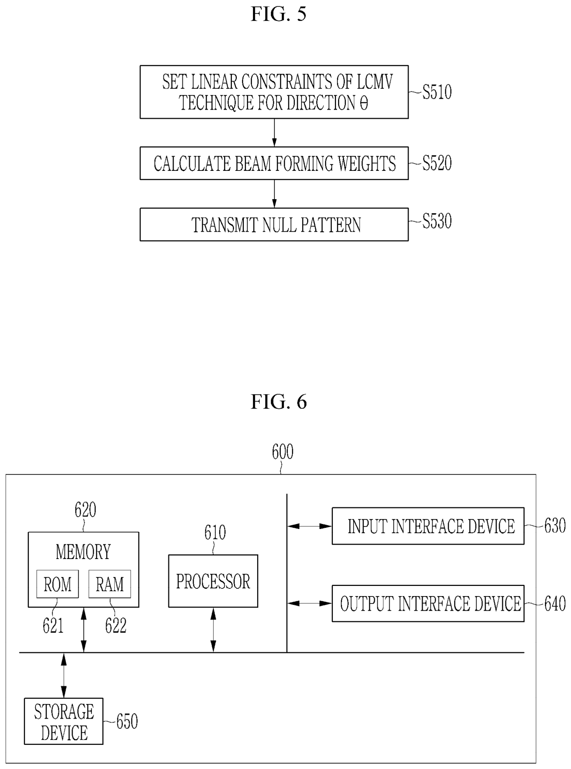

FIG. 5 depicts a flow diagram of a null formation method according to a security policy of a security policy manager according to some embodiments.

Referring to FIG. 5, if the received signal of the angle of arrival θ estimated by the angle of arrival estimator 430 is determined to be an abnormal signal, the beam forming controller 440 sets linear constraints of the LCMV technique for the corresponding direction θ so that the gain of the corresponding direction θ becomes 0 according to the control of the security policy manager 470 (S510), and may calculate beam forming weights satisfying the set linear constraints (S520).

The phased array antenna system 410 may transmit an actual null pattern by adjusting the phase and amplitude of each antenna according to the beam forming weights calculated by the beam forming controller 440 (S530).

The channel estimator 450 may estimate the channel state after transmitting a null pattern. The channel estimator 450 may perform channel tracking by temporarily reducing a value of the forgetting factor in the RLS technique. If the channel state stabilizes, the forgetting factor may be set back to the original value. In this way, monitoring (e.g., continuous monitoring) of the suspicious direction θ may be performed.

In some embodiments, if abnormal signals are detected as results of abnormality detection by the anomaly detector 460 through monitoring, and the threat level increases accordingly, the security policy manager 470 may set security policies for strengthening security, such as forming a stronger null or blocking communication.

FIG. 6 depicts a block diagram of a wireless security device according to some embodiments.

Referring to FIG. 6, the wireless security device 600 may represent a computing device in which the wireless security method described above is implemented. The wireless security device 600 may include at least one of processor 610, a memory 620, an input interface device 630, an output interface device 640, and a storage device 650. Each component is connected to a bus 660 and may communicate with each other. In some embodiments, each component may be connected through an individual interface or individual bus centered on the processor 610, rather than the common bus 660.

The processor 610 may be implemented as various types such as an application processor (AP), a central processing unit (CPU), a graphics processing unit (GPU), etc., and may be any semiconductor device that executes a command stored in the memory 620 or storage device 650. The processor 610 may execute program commands stored in at least one of the memory 620 or the storage device 650. This processor (610) stores program commands for implementing at least some functions of the phased array antenna system 410, signal processor 420, arrival angle estimator 430, beam forming controller 440, channel estimator 450, anomaly detector 460, and security policy manager 470 illustrated in FIG. 2 in the memory 620, and may perform the operations of the wireless security device 400 described with reference to FIGS. 1 to 5.

The memory 620 and storage device 650 may include various forms of volatile or non-volatile storage media. For example, the memory 620 may include a read-only memory (ROM) 621 and a random access memory (RAM) 622. According to some embodiments, the memory 620 may be located inside or outside the processor 610, and the memory 620 may be connected to the processor 610 via various known connection mechanisms.

The input interface device 630 may be configured to provide data to the processor 610. The output interface device 640 may be configured to output data from the processor 610. According to some embodiments, the input interface device 630 and the output interface device 640 may be network interface devices connected to a network.

At least some of the wireless security methods according to the embodiments may be implemented as a program or software running on a computing device, and the program or software may be stored on a computer-readable medium. In some embodiments, at least some of the wireless security methods may be implemented in hardware that can be electrically connected to a computing device.

According to some embodiments, a security system of a battery pack may be constructed by utilizing antennas of a wireless battery management system to increase or enhance detection and defense capabilities against wireless hacking attempts, and to improve reliability and stability of communication, to enhance the overall safety of the wireless battery management system. According to some embodiments, the wireless communication security of the wireless battery management system may be further strengthened because it may adaptively respond to a changing communication environment.

Aspects of some embodiments have been disclosed herein, and although specific terms are employed, they are used and are to be interpreted in a generic and descriptive sense only and not for the purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A wireless security device (400, 600) comprising:
a plurality of antennas associated with a battery management system, BMS;
an angle-of-arrival estimator (430) configured to estimate an angle of arrival from a signal received through at least one antenna (411) among the plurality of antennas and calculate a reliability index for the angle of arrival;
a beam forming controller (440) configured to calculate a beam forming weight and control a phase and an amplitude of the signal based on the beam forming weight;
a channel estimator (450) configured to estimate a channel state of the signal and calculate a channel change rate based on the channel state; and
an anomaly detector (460) configured to perform anomaly detection for the signal based on the channel state, the channel change rate, the angle of arrival, and the beam forming weight.

2. The wireless security device (400, 600) as claimed in claim 1, further comprising
a security policy manager (470) configured to determine a security policy based on abnormality detection results of the anomaly detector (460).

3. The wireless security device (400, 600) as claimed in claim 2, wherein
the anomaly detector (460) is configured to calculate a threat level based on the signal being determined to satisfy an abnormality criterion based on the abnormality detection results, and
the security policy manager (470) is configured to determine a security policy based on the threat level.

4. The wireless security device (400, 600) as claimed in claim 3, wherein
the anomaly detector (460) is configured to calculate a signal continuity index based on times during which signals are detected at the angle of arrival and calculate the threat level based on the reliability index, the signal continuity index, and a signal strength index, and
the signal strength index is calculated from a power of the signal.

5. The wireless security device (400, 600) as claimed in any one of claims 1 to 4, wherein
the beam forming controller (440) is configured to set constraints for maximizing a gain in a direction of a target signal and minimizing a gain in a direction of an interference signal based on the angle of arrival, the reliability index, and a previously estimated channel state information, and
the beam forming weight satisfies the constraints.

6. The wireless security device (400, 600) as claimed in claim 3 or claimed, as far as depending on claim 3, in claim 4 or 5, wherein
the security policy manager (470) is configured to activate the plurality of antennas based on the threat level.

7. The wireless security device (400, 600) as claimed in claim 3 or claimed, as far as depending on claim 3, in any one of claims 4 to 6, wherein
the angle-of-arrival estimator (430) is configured to estimate the angle of arrival using a multiple signal classification, MUSIC, algorithm, and
the security policy manager (470) is configured to adjust an angle unit set in the MUSIC algorithm according to the threat level.

8. The wireless security device (400, 600) as claimed in claim 3 or claimed, as far as depending on claim 3, in any one of claims 4 to 7, wherein
the security policy manager (470) is configured to determine a formation of a null pattern in a direction of the angle of arrival according to the threat level.

9. The wireless security device (400, 600) as claimed in any one of claims 1 to 8, wherein
the channel estimator (450) is configured to estimate the channel state for the signal at a current time point using a recursive least square, RLS, method using a forgetting factor, and adjust the forgetting factor based on a signal-to-noise ratio of the signal, an estimated error between the signal at a previous time point and a signal predicted by the channel state, and a channel change rate at the previous time point.

10. The wireless security device (400, 600) as claimed in claim 9, wherein
the channel estimator (450) is configured to calculate a channel quality index for the channel state, and
the anomaly detector (460) is configured to perform anomaly detection on the signal based on the channel quality index.

11. The wireless security device (400, 600) as claimed in claim 8, wherein
the angle-of-arrival estimator (430) is configured to calculate a spatial reliability by comparing an angle of arrival angle estimated at a current time point with a set trust region, calculate a temporal reliability by analyzing time series data including an estimated angle of arrival information of the current time point and an estimated angle of arrival information of a previous time point, calculate a statistical reliability based on a signal-to-noise ratio of the signal and data used for estimating the angle of arrival, and calculate the reliability index based on the spatial reliability, the temporal reliability, and the statistical reliability.

12. The wireless security device (400, 600) as claimed in claim 11, wherein
the angle-of-arrival estimator (430) is configured to dynamically adjust the trust region according to driving information of a vehicle.

13. A battery pack (10) comprising:
a battery module (110_1, 110_2, 110_N);
a first battery management system (310_1, 310_2, 310_N) comprising a first antenna, and configured to monitor the battery module (110_1, 110_2, 110_N);
a second battery management system (320) comprising a second antenna, and configured to communicate wirelessly with the first battery management system (310_1, 310_2, 310_N); and
a wireless security device (400, 600) configured to configure the first antenna and the second antenna as a phased array antenna, determine whether a signal received through the phased array antenna satisfies an abnormality criterion, calculate a threat level for the signal based on the signal satisfying the abnormality criterion, and determine a security policy according to the threat level.

14. The battery pack (10) as claimed in claim 13, wherein
the wireless security device (400, 600) comprises,
an angle-of-arrival estimator (430) configured to estimate an angle of arrival from the signal and calculate a reliability index for the angle of arrival;
a beam forming controller (440) configured to set constraints for maximizing a gain in a target signal direction and minimizing a gain in an interference signal direction based on the angle of arrival, the reliability index, and a previously estimated channel state information, calculate a beam forming weight satisfying the constraints, and control a phase and an amplitude of the signal based on the beam forming weight;
a channel estimator (450) configured to estimate a channel state of the signal and calculate a channel change rate based on the channel state;
an anomaly detector (460) configured to determine whether the signal satisfies an abnormality criterion based on the channel state, the channel change rate, the angle of arrival, and the beam forming weight, and calculate the threat level; and
a security policy manager (470) configured to determine the security policy based on the threat level.

15. A wireless security method of a wireless security device (400, 600) located in a battery pack (10), the wireless security method comprising:
estimating an angle of arrival from a signal received through a phased array antenna including a first antenna of a first battery management system (310_1, 310_2, 310_N) that monitors a battery module (110_1, 110_2, 110_N) and a second antenna of a second battery management system (320) that communicates with the first battery management system (310_1, 310_2, 310_N);
calculating a beam forming weight that satisfies constraints of maximizing gain in a direction of a target signal and minimizing gain in a direction of an interference signal based on the angle of arrival and a previously estimated channel state information;
estimating a channel state of the signal;
calculating a channel change rate based on the channel state; and
determining whether the signal satisfies an abnormality criterion based on the channel state, the channel change rate, the angle of arrival, and the beam forming weight.
